# FASCICULE DE BREVET EUROPEEN

(11) **EP 4 369 310 B1**
(45) Date de publication et mention de la délivrance du brevet: **07.10.2026**
(21) Numéro de dépôt: 23208814.6
(22) Date de dépôt: 09.11.2023
(51) Int. Cl.: G06V 10/44, G06V 10/74, G06V 10/764, G06V 10/82

(54) **PROCÉDÉ DE CLASSIFICATION D'UNE IMAGE À CLASSER PARMI UN ENSEMBLE DE CLASSES PRÉDÉFINIES, ENSEMBLE DE PRODUIT(S) PROGRAMME D ORDINATEUR ET SYSTÈME ÉLECTRONIQUE DE CLASSIFICATION ASSOCIÉS**
VERFAHREN ZUR KLASSIFIZIERUNG EINES ZU KLASSIFIZIERENDEN BILDES ZWISCHEN EINER REIHE VON VORDEFINIERTEN KLASSEN, ENTSPRECHENDE COMPUTERPROGRAMMPRODUKT(EN) UND ELEKTRONISCHES KLASSIFIZIERUNGSSYSTEM
METHOD FOR CLASSIFYING AN IMAGE TO BE CLASSIFIED FROM A SET OF PREDEFINED CLASSES, ASSOCIATED SET OF COMPUTER PROGRAM PRODUCT(S) AND ELECTRONIC CLASSIFICATION SYSTEM

(30) Priorité: 09.11.2022 FR 2211668
(43) Date de publication de la demande: 15.05.2024
(73) Titulaire: THALES, 92190 Meudon (FR)
(72) Inventeur: Addad, Boussad, 91767 PALAISEAU (FR); Kodjabachian, Jérôme, 91767 PALAISEAU (FR)
(74) Mandataire: Lavoix

(56) Documents cités:
- MIAO JIAJIA ET AL: "Deep Feature Extraction Based on Siamese Network and Auto-Encoder for Hyperspectral Image Classification", IGARSS 2019 - 2019 IEEE INTERNATIONAL GEOSCIENCE AND REMOTE SENSING SYMPOSIUM, IEEE, 28 July 2019 (2019-07-28), pages 397 - 400, XP033656613, DOI: 10.1109/IGARSS.2019.8899230
- LAGUNES-FORTIZ MIGUEL ET AL: "Learning Discriminative Embeddings for Object Recognition on-the-fly", 2019 INTERNATIONAL CONFERENCE ON ROBOTICS AND AUTOMATION (ICRA), IEEE, 20 May 2019 (2019-05-20), pages 2932 - 2938, XP033593672, DOI: 10.1109/ICRA.2019.8793715
- LIU XUNING ET AL: "Siamese Convolutional Neural Networks for Remote Sensing Scene Classification", IEEE GEOSCIENCE AND REMOTE SENSING LETTERS, IEEE, USA, vol. 16, no. 8, 1 August 2019 (2019-08-01), pages 1200 - 1204, XP011736025, ISSN: 1545-598X, [retrieved on 20190719], DOI: 10.1109/LGRS.2019.2894399
- GAO JUNLING ET AL: "A Deep Siamese-Based Plantar Fasciitis Classification Method Using Shear Wave Elastography", IEEE ACCESS, vol. 7, 20 September 2019 (2019-09-20), pages 130999 - 131007, XP011746982, DOI: 10.1109/ACCESS.2019.2940645
- CAO XU ET AL: "Double-Triplet-Pseudo-Siamese Architecture For Remote Sensing Aircraft Target Recognition", 2021 INTERNATIONAL CONFERENCE ON COMPUTER, BLOCKCHAIN AND FINANCIAL DEVELOPMENT (CBFD), IEEE, 23 April 2021 (2021-04-23), pages 140 - 146, XP034115684, DOI: 10.1109/CBFD52659.2021.00034
- LUNGU IULIA ALEXANDRA ET AL: "Multi-Resolution Siamese Networks for One-Shot Learning", 2020 2ND IEEE INTERNATIONAL CONFERENCE ON ARTIFICIAL INTELLIGENCE CIRCUITS AND SYSTEMS (AICAS), IEEE, 31 August 2020 (2020-08-31), pages 183 - 187, XP033762528, DOI: 10.1109/AICAS48895.2020.9073996
- CAO ZHENJIE ET AL: "Supervised Contrastive Pre-training for Mammographic Triage Screening Models", 21 September 2021, 20210921, PAGE(S) 129 - 139, XP047622246

## Description

La présente invention concerne un procédé de classification d'une image à classer parmi un ensemble de classes prédéfinies, à partir d'un modèle de classification, le procédé étant mis en œuvre par un système électronique de classification.

Dans le domaine de la surveillance, il est connu d'utiliser des modèles connectés à un capteur d'image pour détecter la présence d'aéronef tel que des avions, des hélicoptères ou des drones à proximité d'une zone de surveillance.

A titre d'exemple, la détection de drones aux alentours d'un aéroport est un enjeu actuel car ces drones peuvent perturber les aéronefs décollant et atterrissant sur l'aéroport et ainsi perturbant tout le fonctionnement de l'aéroport.

De même, il est connu de surveiller les aéronefs survolant une zone protégée ou une zone dangereuse, pour des raisons de sécurité et/ou des raisons stratégiques.

Pour cela, on connaît l'utilisation d'un modèle de classification à réseau de neurones pour classer des images. On connaît notamment des modèles de classification comprenant deux réseaux de neurones connectés entre eux dont le premier est un encodeur et le deuxième est un classificateur. Lorsqu'une image est fournie à l'encodeur, ce dernier est destiné produire un vecteur comprenant un nombre réduit de composantes numériques, représentatif du contenu de l'image. Le deuxième réseau de neurones est un classificateur destiné à classer si le vecteur représentatif du contenu de l'image correspond à une classe parmi une pluralité de classes prédéfinies. Les classes prédéfinies permettent par exemple de distinguer si un objet représenté dans l'image est autorisé ou interdit.

Ces modèles de classification sont alors généralement connectés en entrée d'un système d'alarme propre à émettre une alarme et/ou déclencher un protocole d'actions à mettre en œuvre, lorsqu'un objet interdit est détecté par le modèle de classification.

Toutefois, de tels modèles souffrent de deux problèmes majeurs les rendant peu robustes.

Le premier problème concerne les « exemples adversaires » (de l'anglais, adversarial examples). Ces exemples adversaires sont des images représentant un contenu associé à une classe prédéfinie mais qui ont été légèrement modifiées, de manière imperceptible pour l'œil humain, afin de tromper le modèle de classification pour qu'il la classe dans une autre des classes prédéfinies. Par exemple, une image représentant un drone peut être modifiée pour que le modèle de classification considère qu'il s'agit d'un hélicoptère sans que cette modification se soit visible par l'œil humain.

Ainsi, lors d'une attaque sur le modèle de classification, ce type de modifications des images à classer est discret, puisqu'invisible à l'œil humain.

Le deuxième problème concerne les détections dites « hors domaine », ou OOD (de l'anglais, *Out Of Domain).* Ces détections concernent le classement, dans une des classes prédéfinies, d'un objet qui ne correspond à aucune des classes. A titre d'exemple, si un modèle de classification particulier est destiné à classer des images dans l'une des trois classes prédéfinies suivantes : avion, hélicoptère et drone, il arrive qu'une image représentant un rapace soit considérée par le modèle de classification comme représentant un avion. Ainsi, bien que l'image représente un rapace et non un avion ou un quelconque engin motorisé, le modèle de classification classera cette image dans la classe : avion.

Les deux problèmes précités sont donc susceptibles de conduire à des fausses alarmes et/ou à des protocoles d'action déclenchés inutilement.

Pour rendre le fonctionnement des modèles de classification plus robuste, on connait des mécanismes auxiliaires de vérification. Ces mécanismes comprennent des réseaux de neurones auxiliaires qui vérifient la classification réalisée par le modèle de classification. Cependant, ces mécanismes alourdissent l'implémentation du modèle et forment un frein à l'embarquabilité du modèle. En effet, si un modèle de classification est destiné à être embarqué dans un système mobile pour lequel une mémoire et/ou une puissance de calcul est limitée, il est généralement complexe, voire impossible, d'embarquer également des réseaux de neurones auxiliaires en charge de la vérification de la classification.

Exemples de l'état de la technique:
MIAO JIAJIA ET AL: "Deep Feature Extraction Based on Siamese Network and Auto-Encoder for Hyperspectral Image Classification",IGARSS 2019 - 2019 IEEE INTERNATIONAL GEOSCIENCE AND REMOTE SENSING SYMPOSIUM, IEEE, 28 juillet 2019 (2019-07-28), pages 397-400, DOI: 10.1109/IGARSS.2019.8899230;
LAGUNES-FORTIZ MIGUEL ET AL: "Learning Discriminative Embeddings for Object Recognition on-the-fly",2019 INTERNATIONAL CONFERENCE ON ROBOTICS AND AUTOMATION (ICRA), IEEE, 20 mai 2019 (2019-05-20), pages 2932-2938, DOI: 10.1109/ ICRA.2019.8793715;
LIU XUNING ET AL: "Siamese Convolutional Neural Networks for Remote Sensing Scene Classification",IEEE GEOSCIENCE AND REMOTE SENSING LETTERS, IEEE, USA, vol. 16, no. 8, 1 août 2019 (2019-08-01), pages 1200-1204, ISSN: 1545-598X, DOI: 10.1109/ LGRS.2019.2894399;
GAO JUNLING ET AL: "A Deep Siamese-Based Plantar Fasciitis Classification Method Using Shear Wave Elastography",IEEE ACCESS, vol. 7, 20 septembre 2019 (2019-09-20), pages 130999-131007, DOI: 10.1109/ACCESS.2019.2940645;
CAO XU ET AL: "Double-Triplet-Pseudo-Siamese Architecture For Remote Sensing Aircraft Target Recognition",2021 INTERNATIONAL CONFERENCE ON COMPUTER, BLOCKCHAIN AND FINANCIAL DEVELOPMENT (CBFD), IEEE, 23 avril 2021 (2021-04-23), pages 140-146, DOI: 10.1109/CBFD52659.2021.00034;
LUNGU IULIA ALEXANDRA ET AL: "Multi-Resolution Siamese Networks for One-Shot Learning",2020 2ND IEEE INTERNATIONAL CONFERENCE ON ARTIFICIAL INTELLIGENCE CIRCUITS AND SYSTEMS (AICAS), IEEE, 31 août 2020 (2020-08-31), pages 183-187, DOI: 10.1109/AICAS48895.2020.9073996;
CAO ZHENJIE ET AL: "Supervised Contrastive Pre-training for Mammographic Triage Screening Models", 21 septembre 2021 (2021-09-21), 20210921, PAGE(S) 129 - 139.

La présente invention vise donc à proposer un procédé de classification qui utilise un modèle de classification robuste et qui puisse être embarqué.

A cet effet, la présente invention a pour objet un procédé de classification d'une image à classer parmi un ensemble de classes prédéfinies selon la revendication 1.

Grâce à la formation du modèle d'apprentissage comprenant deux fois le premier réseau de neurones, et l'algorithme d'apprentissage appliqué sur ce modèle d'apprentissage, les premier et deuxième réseaux de neurones sont entraînés d'une manière particulière permettant intrinsèquement de réduire le nombre de classifications erronées.
▪ Suivant d'autres aspects avantageux de l'invention, le procédé de classification est selon l'une quelconque des revendications 2 à 6.

La présente invention a également pour objet un ensemble de produit(s) programme d'ordinateur selon la revendication 7.

La présente invention a également pour objet un système électronique de classification selon la revendication 8.

Ces caractéristiques et avantages de l'invention apparaitront à la lecture de la description qui va suivre, donnée à titre d'exemple non limitatif, et faite en référence aux dessins annexés, sur lesquels :
- [Fig. 1] la figure 1 est une vue schématique d'un système électronique de classification selon l'invention :
- [Fig .2] la figure 2 est un schéma représentant un modèle d'apprentissage formé par le système électronique de la figure 1 ;
- [Fig. 3] la figure 3 est un schéma représentant un modèle de classification généré par le système électronique de la figure 1 ;
- [Fig. 4] la figure 4 est une représentation d'un espace latent issu d'un premier réseau de neurones auquel un apprentissage est appliqué par le système électronique de la figure 1 ; et
- [Fig. 5] la figure 5 est un organigramme d'un procédé de classification selon l'invention, mis en œuvre par le système de classification de la figure 1.

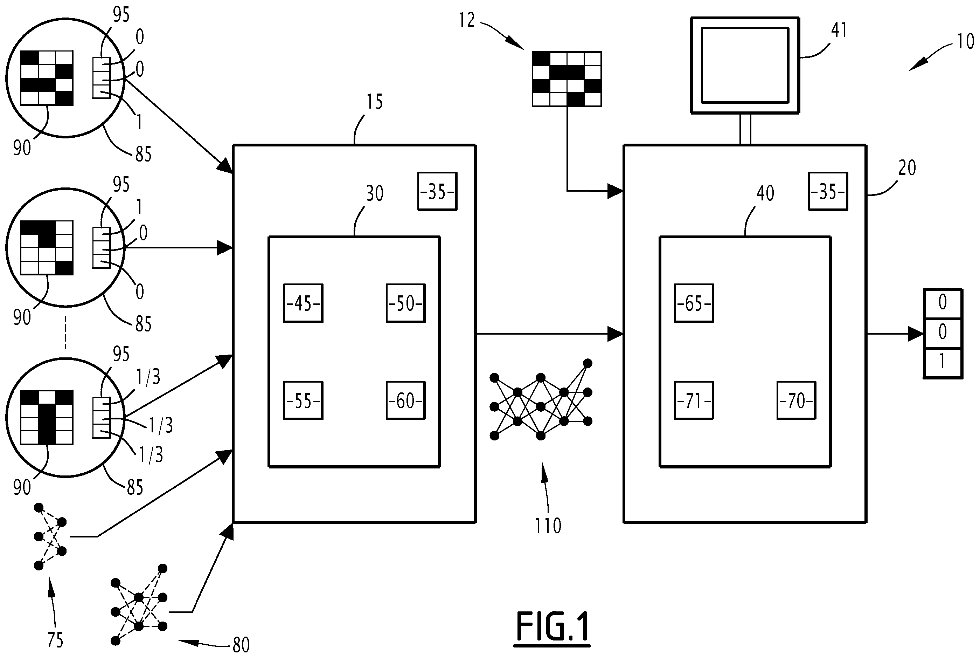

La figure 1 représente un système 10 électronique de classification d'une image à classer 12. Le système de classification 10 comprend un dispositif électronique d'apprentissage 15 et un dispositif électronique d'exploitation 20 connectés entre eux.

Chacun des dispositifs 15, 20 est de préférence un ordinateur. À cet effet, le dispositif d'apprentissage 15 comprend par exemple un premier processeur 25 et une première mémoire 30 comprenant des instructions logicielles propres à être exécutées par le premier processeur 25. De manière analogue, le dispositif d'exploitation 20 comprend un deuxième processeur 35 et une deuxième mémoire 40 comprenant également des instructions logicielles propres à être exécutées par le deuxième processeur 35.

En complément facultatif, le dispositif d'exploitation 20 comprend préférentiellement un écran d'affichage 41, aussi appelé moniteur, propre à afficher un contenu à destination d'un utilisateur du dispositif d'exploitation 20.

La première mémoire 30 du dispositif d'apprentissage 15 comprend un module d'entrée 45, un module 50 de formation d'un modèle d'apprentissage, un module 55 d'application d'un algorithme d'apprentissage automatique au modèle d'apprentissage, et un module 60 de génération d'un modèle de classification.

Pour sa part, la deuxième mémoire 40 comprend un module 65 de réception de l'image à classer 12, un module 70 de détermination de la classe associée à l'image à classer 12, et optionnellement un module d'affichage 71 sur le moniteur 41.

Dans l'exemple de la figure 1, les modules 45, 50, 55, 60, 65, 70, 71, sont réalisés chacun sous forme d'un ou plusieurs logiciels, ou d'une brique logicielle, exécutables par le processeur respectif 25, 35.

Chaque logiciel est en outre apte à être enregistré sur un support, non-représenté, lisible par ordinateur.

Le support lisible par ordinateur est par exemple un medium apte à mémoriser les instructions électroniques et à être couplé à un bus d'un système informatique. À titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le ou chaque support lisible est alors mémorisé un programme d'ordinateur comprenant des instructions logicielles. On comprend alors qu'on parle d'un ensemble de produits programmes d'ordinateur comprenant un produit programme d'ordinateur d'apprentissage, correspondant au dispositif électronique d'apprentissage 15, et un produit programme d'ordinateur d'exploitation correspondant au dispositif électronique d'exploitation 20.

En variante non-représentée, chaque dispositif 15, 20, ou même chaque module 45, 50, 55, 60, 65, 70, 71, est réalisé chacun sous forme d'un composant logique programmable, tel qu'un FPGA (de l'anglais *Field Programmable Gate Array)* ou encore d'un circuit intégré tel qu'un ASIC (de l'anglais *Application Specific Integrated Circuit).*

Le module d'entrée 45 est propre à recevoir un premier réseau de neurones 75 et un deuxième réseau de neurones 80.

De manière connue en soi, le premier 75 et le deuxième 80 réseaux de neurones sont des réseaux de neurones artificiels comprenant respectivement une couche d'entrée (de l'anglais *input layer)* comportant une pluralité de neurones. Chaque réseau de neurones 75, 80 comprend en outre une ou plusieurs couches cachées (de l'anglais *hidden layer(s))* comportant respectivement une pluralité de neurones, et une couche de sortie (de l'anglais *output layer)* comportant également une pluralité de neurones. Chaque réseau de neurones 75, 80 comprend en outre des connexions entre les neurones des différentes couches respectives, chaque connexion ayant un poids synaptique réglable, également appelé poids réglable.

Le module d'entrée 45 est propre à recevoir les premier 75 et deuxième 80 réseaux de neurones dans un état naïf. On entend par l'expression « un réseau de neurones dans un état naïf » un réseau de neurones n'ayant pas encore subi d'étape d'apprentissage. Autrement dit, chaque poids synaptique réglable de chaque réseau de neurones 75, 80 est fixé à une valeur arbitraire, par exemple égale à 1. En particulier, sur la figure 1, le type naïf des réseaux de neurones 75, 80 est représenté par le fait que les connexions soient en trait pointillé et non en trait plein.

Préférentiellement, le premier réseau de neurones 75 est un encodeur. Le premier réseau de neurone est configuré pour, une fois qu'un apprentissage lui est appliqué, convertir une image numérisée en un vecteur, dit vecteur de sortie 82. Le vecteur de sortie 82 est représentatif du contenu de l'image. Autrement dit, lorsqu'une image est fournie en entrée du premier réseau de neurones 75 ayant subi un apprentissage, le premier réseau de neurones 75 est propre à fournir un vecteur de sortie 82 représentatif des éléments illustrés sur l'image.

On dit également que le vecteur de sortie 82 est une représentation de l'image fournie en entrée du premier réseau de neurones 75, dans un espace latent. Dans l'espace latent, deux vecteurs algébriquement proches sont représentatifs de contenus d'images sensiblement similaires.

Le deuxième réseau de neurones 80 est préférentiellement un classificateur. Le deuxième réseau de neurones 80 est configuré pour, une fois qu'un apprentissage lui est appliqué, déterminer, à partir d'un vecteur de sortie 82, une classe à laquelle appartient le contenu de l'image associé au vecteur de sortie 82, parmi un ensemble de classes prédéfinies.

Par exemple, l'ensemble de classes prédéfinies comprend les classes suivantes : un drone, un avion, et un hélicoptère. On comprend alors que le classificateur 80 est propre à identifier, à partir du vecteur de sortie 82 associé à une image, si ladite image représente un drone, un avion, ou un hélicoptère, ou aucun d'entre eux.

Le module d'entrée 45 est en outre propre à obtenir un jeu de données d'apprentissage non-représentées.

À cet effet, le module d'entrée 45 est propre à recevoir, depuis un dispositif et/ou utilisateur externe, un ensemble de données labélisées 85. Chaque donnée labélisée 85 comprend une image 90 et un vecteur 95.

Dans l'exemple de classes prédéfinies explicité plus haut, l'ensemble de données labélisées 85 comprend des images 90 représentant un drone, des images 90 représentant un avion, des images 90 représentant un hélicoptère, et des images 90 représentant autre chose.

Chaque vecteur 95 comprend une pluralité de composantes. Chaque composante des vecteurs 95 est associée à une classe prédéfinie. Dans l'exemple décrit précédemment, le vecteur 95 comprend alors trois composantes, i.e. une composante pour chacun : d'un drone, d'un avion, et d'un hélicoptère.

Pour chaque donnée labélisée 85, le vecteur 95 associé à l'image 90 comprend une première valeur pour la composante correspondant à la classe représentée sur l'image 90 et une deuxième valeur pour toutes les autres composantes. La première valeur est par exemple égale à 1, la deuxième valeur étant par exemple égale à 0. Autrement dit, si l'image 90 représente un drone, le vecteur 95 associé comprend la valeur 1 pour la composante associée à la classe drone et la valeur 0 pour chaque autre composante.

Le module d'entrée 45 est propre à former, à partir de l'ensemble de données labélisées 85, le jeu de données d'apprentissage. Pour cela, le module d'entrée 45 est propre à former des couples d'images 90, et associer à chaque couple d'images 90 un vecteur de classe comprenant un nombre de composantes égal au nombre de classes. Chaque composante de chaque vecteur de classe est égale à la première valeur si chacune des deux images 90 formant la donnée d'apprentissage représente un objet correspondant à la classe associée à ladite composante, ou la deuxième valeur sinon. Autrement dit, si, pour une donnée d'apprentissage quelconque, les deux images 90 représentent un drone, alors le vecteur de classe aura une composante associée à la classe « drone » ayant la première valeur, les autres composantes ayant la deuxième valeur.

Selon un mode de réalisation, lorsque l'image 90 ne correspond à aucune des classes prédéfinies, chaque coefficient du vecteur 95 associé a une troisième valeur. La troisième valeur est par exemple égale au quotient entre la valeur 1 et le nombre de classes. En d'autres termes, si le nombre de classes est égal à trois, la troisième valeur est égale à 1/3.

Alternativement, la troisième valeur est égale à la deuxième valeur.

De même que précédemment, si les deux images 90 d'une donnée d'apprentissage quelconque ne représentent pas un objet appartenant à la même classe, alors toutes les composantes du vecteur de classe sont identiques entre elles, par exemple égal à la troisième valeur.

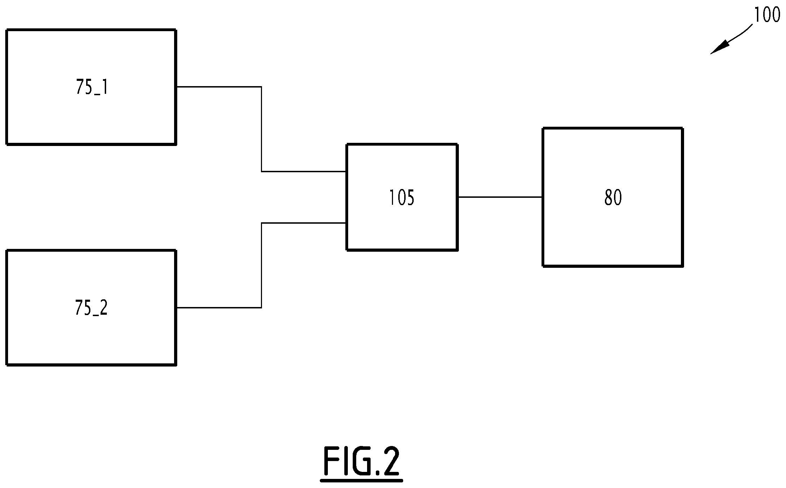

Le module de formation 50 est propre à former un modèle d'apprentissage 100, représenté sur la figure 2, à partir des premier 75 et deuxième 80 réseaux de neurones.

Comme illustré sur la figure 2, le modèle d'apprentissage 100 comprend deux fois le même premier réseau de neurones 75, une fonction de combinaison prédéfinie 105 connectée en sortie des premiers réseaux de neurones 75, et le deuxième réseau de neurones 80 connecté en sortie de la fonction de combinaison prédéfinie 105.

Par soucis de clarté, les deux premiers réseaux de neurones du modèle d'apprentissage 100 sont notés 75_1 et 75_2 dans la suite de la description.

Selon l'exemple de réalisation, la fonction de combinaison prédéfinie 105 est propre à calculer la moyenne des composantes de deux vecteurs. Autrement dit, la fonction de combinaison 105 est propre à sommer deux vecteurs pour former un vecteur résultant et propre à diviser chaque composante du vecteur résultant par deux. Autrement dit, la fonction de combinaison prédéfinie 105 respecte l'équation suivante : [MATH 1] $f \left(a, b\right) = \frac{\left(a+b\right)}{2}$ où *a* et b sont des vecteurs quelconques de mêmes dimensions, et *f* est la fonction de combinaison prédéfinie.

Autrement dit, la fonction de combinaison prédéfinie 105 effectue une moyenne des coefficients des vecteurs de sortie 82 issus des premiers réseaux de neurones 75_1, 75_2 respectifs.

Le module d'application 55 est propre à appliquer un algorithme d'apprentissage automatique au modèle d'apprentissage 100, à partir des données d'apprentissage obtenues par le module d'entrée 45. L'algorithme d'apprentissage automatique est par exemple un algorithme d'apprentissage automatique supervisé. Autrement dit, l'algorithme d'apprentissage automatique vise à entraîner le modèle d'apprentissage 100 de sorte à ce que, lorsqu'un couple d'images 90 des données d'apprentissage lui est fourni en entrée, via les premiers réseaux de neurones 75_1, 75_2, ledit modèle d'apprentissage 100 fournit en sortie du deuxième réseau de neurones 80, un vecteur sensiblement similaire au vecteur de classe de ladite donnée d'apprentissage. Il est clair que la fourniture des images 90 des données d'apprentissage aux premiers réseaux de neurones 75_1, 75_2 signifie qu'une des images 90 est fournie à l'un des premiers réseaux de neurones 75_ 1 et que l'autre image 90 est fournie à l'autre premier réseau de neurones 75_2. On entend par « entraîner le modèle d'apprentissage 100 », le réglage des poids synaptiques réglables présents sur les connexions entre les neurones des premier 75_ 1, 75_2 et entre les neurones du deuxième 80 réseaux de neurones.

De manière connue en soi, l'algorithme d'apprentissage automatique est un algorithme d'optimisation visant à minimiser les différences entre les vecteurs de classe et les vecteurs issue du deuxième réseau de neurones 80, pour tous les couples d'images 90 des données d'apprentissage, en modifiant les poids synaptiques réglables des premiers 75_1, 75_2 et deuxième 80 réseaux de neurones. Par exemple, l'algorithme d'optimisation est un algorithme de descente de gradient stochastique connu en soi.

Le module d'application 55 est propre à ce que, tout au long de l'application de l'algorithme d'apprentissage automatique, les premiers 75_ 1, 75_2 réseaux de neurones soient identiques entre eux. Autrement dit, l'algorithme d'optimisation n'est appliqué que sur les poids réglables d'un des premiers réseaux de neurones 75_1 et sur les poids réglables du deuxième réseau de neurones 80. Ainsi, les poids réglables de l'autre premier réseau de neurones 75_2 sont, à chaque instant une copie des poids réglables du premier réseau de neurones 75_ 1 sur lequel est appliqué l'algorithme d'optimisation, tout au long de l'application de l'algorithme d'apprentissage.

Le module d'application 55 est configuré pour obtenir, à l'issue de l'application de l'algorithme d'apprentissage automatique, un premier réseau de neurones entrainé 75* à partir du premier réseau de neurones 75, et un deuxième réseau de neurones entrainé 80* à partir du deuxième réseau de neurones 80.

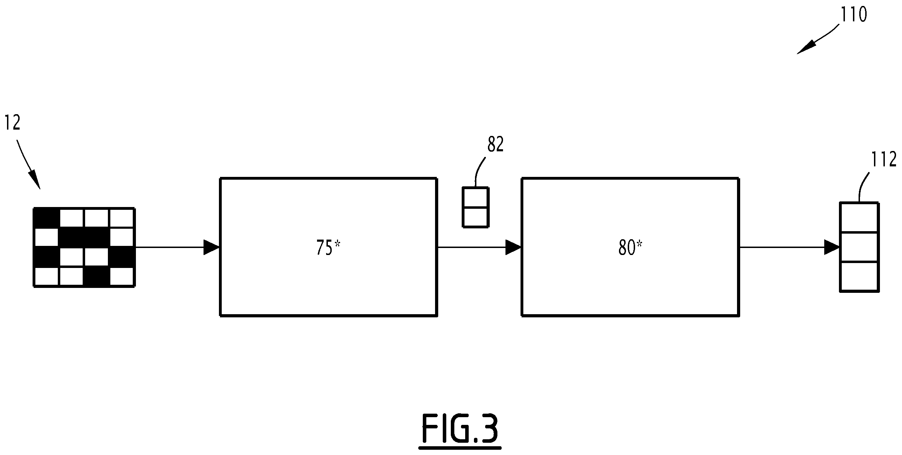

De nouveau en référence à la figure 1, le module de génération 60 est propre à générer un modèle de classification 110 par connexion du deuxième réseau de neurones entrainé 80* en sortie du premier réseau de neurones entrainé 75*, comme illustré sur la figure 3.

Sur la figure 3, le modèle de classification 110 est représenté par concaténation des premier 75* et deuxième 80* réseaux de neurones entrainés. Le caractère « entrainé » des réseaux de neurones 75*, 80* est représenté sur la figure 1 par le fait que les connexions entre les neurones dans le modèle classification 110 soient en trait plein. Le dispositif d'apprentissage 15 est configuré pour transmettre au dispositif d'exploitation 20, le modèle de classification 110. Cette transmission est par exemple réalisée via une connexion filaire entre les dispositifs 15, 20 ou par une connexion sans fil.

Selon un mode de réalisation, le dispositif électronique d'exploitation 20 est embarqué dans un véhicule, tel qu'un aéronef. Ainsi, la transmission du modèle de classification 110 correspond à un chargement dudit modèle 110 dans le dispositif 20, par exemple préalablement à l'embarquement dudit dispositif d'exploitation 20 à bord du véhicule.

Le dispositif d'exploitation est par exemple connecté à une caméra embarquée à bord du véhicule, non-représentée. La caméra est alors configurée pour capturer une pluralité d'images à des instants successifs et pour transmettre, au dispositif d'exploitation les images capturées. Les images capturées comprennent alors l'image à classer 12.

Le module de réception 65 est configuré pour recevoir l'image à classer 12, par exemple depuis la caméra non-représentée.

En variante, le module de réception 65 est configuré pour recevoir l'image à classer 12 depuis le même ou un autre utilisateur externe, par exemple via des périphériques non-représentés, du dispositif d'exploitation 20.

Le module de détermination 70 est propre à déterminer la classe associée à l'image à classer 12 reçue par le module de réception 65. Pour cela, le module de détermination 70 est propre à fournir l'image à classer 12 en entrée du modèle de classification 110 obtenu depuis dispositif d'apprentissage 15. Le module de détermination 70 est ainsi configuré pour calculer, à partir du modèle de classification 110, un vecteur 112 respectif de l'image à classer 12. Le vecteur calculé 112 est le vecteur issu du deuxième réseau de neurones entrainé 80* dans le modèle de classification 110.

Le vecteur calculé 112 comporte une pluralité de composantes correspondant respectivement aux classes de l'ensemble de classes prédéfinies. Préférentiellement, chaque composante du vecteur calculé 112 a une valeur comprise entre la deuxième valeur prédéfinie et la première valeur prédéfinie.

Optionnellement, le module de détermination 70 est propre à comparer chaque composante du vecteur calculé 112, à un seuil prédéfini. Si l'une des composantes est supérieure au seuil prédéfini, le module de détermination 70 est alors propre à associer à l'image à classer 12, la classe correspondant auxdits coefficients correspondants. Si aucune des composantes du vecteur calculé 112 n'est supérieure au seuil prédéfini, le module de détermination 70 est propre à n'associer, à l'image à classer 12, aucune classe de l'ensemble de classes prédéfinies.

La valeur du seuil prédéfini est comprise entre la première valeur et la deuxième valeur.

La valeur du seuil prédéfini résulte d'un compromis. En effet, la valeur du seuil prédéfini est suffisamment élevée pour bien discriminer les images ne représentant un objet appartenant à aucune classe. Elle est suffisamment faible pour éviter que des images représentant des objets associés à une des classes prédéfinies ne soient considérés comme n'appartenant à aucune des classes prédéfinies. Cependant, pour limiter le risque de mauvaise classification, il est préférable que la valeur du seuil prédéfini soit trop élevée plutôt que trop faible.

A titre d'exemple, si toutes les images représentant des objets d'une des classes sont classifiées avec une probabilité supérieure 0.70 et toutes les images représentant des objets d'aucune des classes sont classifiées avec une probabilité inférieure à 0.40, alors la valeur du seuil est située entre les deux valeurs. Préférentiellement, dans ce cas, la valeur du seuil est fixée à 0.55, i.e. une valeur inférieure à 0.7 et supérieure à 0.4.

Le module facultatif d'affichage 71 est propre à envoyer au moniteur 41 une instruction d'affichage d'un message indiquant la classe déterminée de l'image à classer 12. Autrement dit, le module d'affichage 71 est propre à, si une classe de l'ensemble de classes prédéfinies a été déterminée par le module de détermination 70, envoyer au moniteur 41, l'instruction d'affichage indiquant ladite classe. Dans l'exemple précité, l'instruction d'affichage vise à afficher un message du type : « l'image à classer représente un drone », « l'image à classer représente un hélicoptère », ou « l'image à classer représente un avion ».

Le module d'affichage 71 est propre à, si le module de détermination 70 n'a déterminé aucune classe associée à l'image à classer 12, envoyer au moniteur 41 l'instruction d'afficher un message du type : « l'image à classer 12 ne correspond à aucune des classes prédéfinies ».

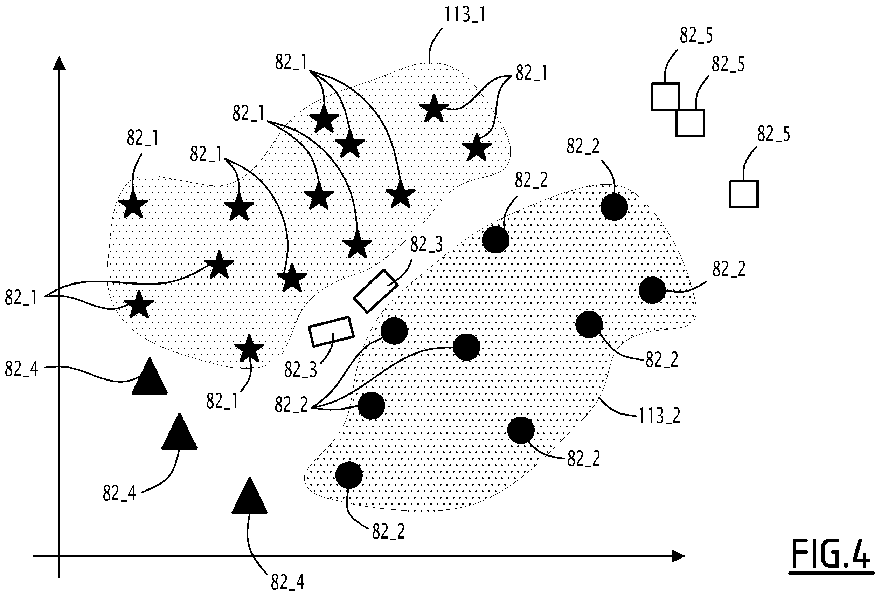

La figure 4 est une représentation schématique de l'espace latent en sortie du premier réseau de neurones entraîné 75*. Ainsi, chaque vecteur de sortie 82 du premier réseau de neurones entraîné 75* y est représenté.

Par soucis de compréhension, l'espace latent est représenté sur la figure 4 en deux dimensions, présupposant ainsi que chaque vecteur de sortie 82 est constitué de deux composantes. Cependant, cette présupposition est uniquement prise pour les besoins d'illustration de la figure 4. Il est clair que les vecteurs de sortie 82 ont un nombre de composantes généralement supérieur à deux.

Sur la figure 4, les vecteurs de sortie 82_1 représentés par des étoiles correspondent à des vecteurs de sortie issus d'images représentant un objet appartenant à une même première classe. De même, les vecteurs de sortie 82_2 représentés par un rond plein correspondent aux vecteurs de sortie associés à des images représentant un objet d'une deuxième classe.

Ainsi, sur la figure 4, le contour 113_1 délimite une zone de l'espace latent pour lequel, tout vecteur de sortie 82_1 est à l'intérieur de ce contour est déterminé comme appartenant à la première classe par le module de détermination 70. De manière analogue, le contour 113_2 délimite une zone de l'espace latent pour lequel, tout vecteur de sortie 82_2 étant à l'intérieur de ce contour est déterminé comme appartenant à la deuxième classe par le module de détermination 70.

Les vecteurs de sortie 82_3, 82_4, 82_5 représentés par des rectangles, des carrés, et des triangles sont des vecteurs de sortie 82_3, 82_4, 82_5 associés à des images représentant un objet n'appartenant à aucune des classes prédéfinies.

En particulier, les vecteurs de sortie 82_3 représentés sous forme rectangulaire correspondent à des exemples adversaires. Autrement dit, ces vecteurs de sortie 82_3 en forme de rectangle correspondent à des images qui ont été modifiées pour essayer de tromper le modèle de classification 110. Ces vecteurs de sortie 82_3 sont par exemple des images représentant un contenu associé à la première classe prédéfinie mais modifiées pour être classer comme appartenant à la deuxième classe prédéfinie par le modèle de classification 110. On voit bien que ces vecteurs de sortie 82_3 ne sont associés ni à la première, ni à la deuxième classe.

Les vecteurs de sortie 82_4, 82_5 représentés sous forme de carré ou de triangle correspondent à des images OOD. Autrement dit, ces images ne représentent pas un objet appartenant à une des classes prédéfinies ou sensiblement similaires à des objets appartenant à ces classes prédéfinies. A titre d'exemple, si la première classe correspond à des drones et la deuxième classe correspond à des avions, lesdits vecteurs de sortie 82_4, 82_5 correspondent à des images représentant des oiseaux, des hélicoptères ou d'autres objets.

Il est clair que le modèle d'apprentissage 100 comprenant deux premiers réseaux de neurones 75_1, 75_2 permet de réaliser un apprentissage desdits premiers réseaux de neurones 75_1, 75_2 et du deuxième réseau de neurones 80 traitant de manière analogue le cas où une des deux images 90 de la donnée d'apprentissage n'appartiennent à aucune des classes prédéfinies et le cas où les deux images 90 de la donnée d'apprentissage ne représentent pas des objets d'une même classe.

Comme indiqué précédemment, le vecteur de sortie 82 issu de chacun des deux premiers réseaux de neurones 75_1, 75_2 suite à l'apprentissage, est représentatif de l'objet présent sur l'image respective fournie auxdits premiers réseaux de neurones 75_1, 75_2. Ainsi, lorsque deux images distinctes représentant des objets appartenant à une même classe, sont fournis en entrée des deux premiers réseaux de neurones 75_1, 75_2, les vecteurs de sortie issus des premiers réseaux de neurones 75_1, 75_2 sont sensiblement similaires. La fonction de combinaison 105 réalisant la moyenne des deux vecteurs de sortie 82, le vecteur issu de la fonction de combinaison 105 est également sensiblement similaire à chacun des deux vecteurs de sortie 82 qui lui sont fournis entrée. Il est alors facile pour le classificateur 80 de classer le vecteur obtenu en sortie de la fonction de combinaison 105 comme appartenant à la classe prédéfinie associée aux images fournies en entrée du modèle d'apprentissage 100.

A contrario, lorsque les deux images 90 fournies en entrée des deux premiers réseaux de neurones 75_1, 75_2 suite à l'apprentissage, représentent des objets appartenant à deux classes prédéfinies distinctes ou à aucune d'entre elles, les vecteurs de sorties 82 associés ne sont pas sensiblement similaires. Ainsi, l'application de la fonction de combinaison 105 à ces deux vecteurs de sortie 82 fournit un vecteur qui n'est comparable à aucun desdits vecteurs de sortie 82. L'application du deuxième réseau de neurones 80 à ce vecteur issu de la fonction de combinaison 105 permet alors facilement de classer ce vecteur comme associé à aucune des classes prédéfinies.

Sur la figure 4, ce phénomène se caractérise par une bande sensiblement large entre les premier contour 113_1, et le deuxième contour 113_2.

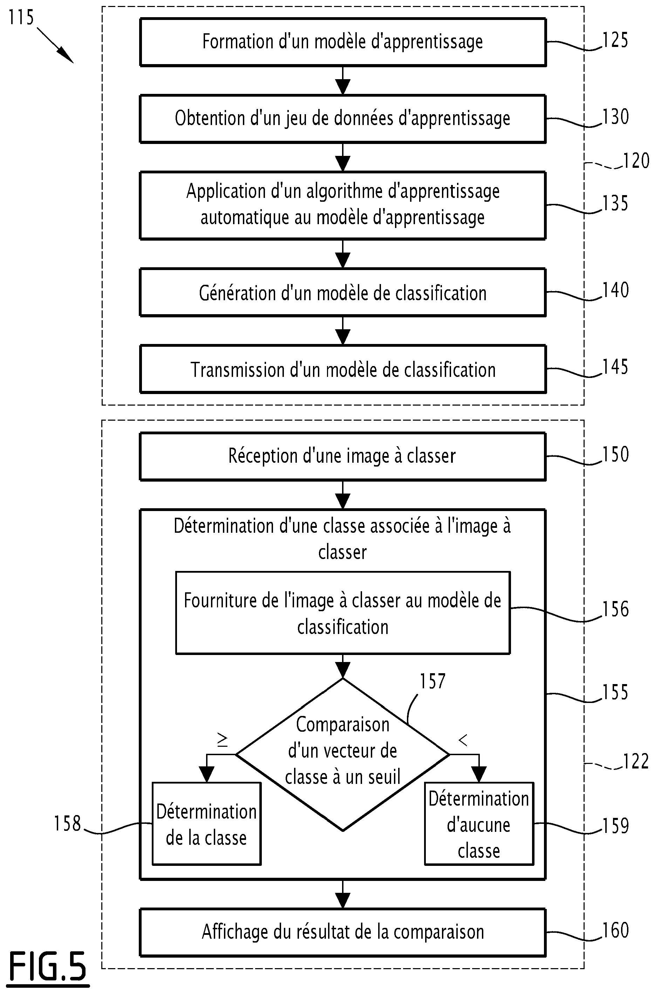

Le fonctionnement du système de classification 10 va maintenant être décrit en référence à la figure 5 représentant un organigramme d'un procédé 115 de classification de l'image à classer 12.

Le procédé de classification 115 comprend une phase d'apprentissage 120 puis une phase d'exploitation 122.

La phase d'apprentissage 120 comprend une étape 125 de formation du modèle d'apprentissage 100. Lors de cette formation, le module d'entrée 45 reçoit le premier 75 et le deuxième 80 réseaux de neurones. Puis, le module de formation 50 forme le modèle d'apprentissage 100 en connectant la fonction de combinaison prédéfinie 105 en sortie de deux fois le premier réseau de neurones 75_1, 75_2, et en connectant le deuxième réseau de neurones 80 en sortie de la fonction de combinaison prédéfinie 105. Lors de l'étape de formation 125, chacun des premier 75_1, 75_2 et deuxième 80 réseaux de neurones est naïf.

Puis, la phase d'apprentissage 120 comprend une étape 130 d'obtention du jeu de données d'apprentissage. Comme expliqué précédemment, lors de l'étape d'obtention 130, le module d'entrée 45 reçoit les données labélisées 85 et forme le jeu de données d'apprentissage à partir desdites données labélisées 85.

La phase d'apprentissage 120 comprend en outre une étape 135 d'application de l'algorithme d'apprentissage automatique, au modèle d'apprentissage 100. Pour cela, le module d'application 55 règle les poids synaptiques réglables des premier 75_1, 75_2 et deuxième 80 réseaux de neurones tel que, pour chaque donnée d'apprentissage, la fourniture de chacune des deux images 90 à un premier réseau de neurones 75_1, 75_2 respectif permet d'obtenir en sortie du modèle d'apprentissage 100, un vecteur sensiblement identique au vecteur de classe de la donnée d'apprentissage. Ainsi, à l'issu de l'étape d'application 135, le module d'application 55 obtient alors le premier réseau de neurones entrainé 75* et le deuxième réseau de neurones entrainé 80*.

La phase d'apprentissage 120 comprend ensuite une étape 140 de génération du modèle de classification 110. Lors de cette étape 140, le module de génération 60 connecte le deuxième réseau de neurones entrainé 80* en sortie du premier réseau de neurones entrainé 75*.

Optionnellement, la phase d'apprentissage 120 comprend en outre une étape de transmission 145 lors de laquelle le module de génération 60 transmet le modèle de classification généré 110 au dispositif électronique d'exploitation 20. Comme expliqué précédemment, cette transmission est par exemple effectuée via une connexion sans fil, ou filaire, entre le dispositif électronique d'apprentissage 15 et le dispositif électronique d'exploitation 20.

La phase d'exploitation 122 est mise en œuvre à l'issue de la phase d'apprentissage 120. Ainsi, lors de la mise en œuvre de la phase d'exploitation 122, le dispositif électronique d'exploitation 20 comprend le modèle de classification 110.

La phase d'exploitation 122 comprend une étape 150 de réception de l'image à classer 12, par la caméra embarquée non-représentée par exemple.

La phase d'exploitation 122 comprend en outre une étape 155 de détermination de la classe associée à l'image à classer 12.

À cet effet, l'étape de détermination comprend de préférence une sous-étape de fourniture 156 lors de laquelle le module de détermination 70 fournit l'image à classer 12, reçue par le module de réception 65, au modèle de classification 110, i.e. en entrée du premier réseau de neurones entrainé 75* du modèle de classification 110 pour calculer le vecteur calculé 112.

Puis, l'étape de détermination 155 comprend une sous-étape de comparaison 157 lors de laquelle le module de détermination 70 compare chaque composante du vecteur calculé 112, au seuil prédéfini.

Si lors de la sous-étape de comparaison 157, une des composantes du vecteur calculé 112, est supérieure au seuil prédéfini, alors, lors d'une première sous-étape de détermination 158, le module de détermination 70 détermine que la classe associée à l'image à classer 12 est la classe correspondant à ladite composante supérieure au seuil prédéfini.

A contrario, si lors de la sous-étape de comparaison 157, aucune des composantes du vecteur calculé 112 n'est supérieure au seuil prédéfini, alors lors d'une deuxième sous-étape de détermination 159, le module de détermination 70 détermine que l'image à classer 12 n'est associée à aucune des classes prédéfinies.

Préférentiellement, la phase d'exploitation 122 comprend en outre une étape d'affichage 160 lors de laquelle le module d'affichage 71 envoie, au moniteur 41 du dispositif d'exploitation 20, l'instruction d'affichage décrite précédemment.

Selon une variante, lors de l'étape de formation 125, le module d'entrée 45 reçoit les premier 75 et deuxième 80 réseaux de neurones dans un état pré-entrainé, plutôt que dans l'état naïf. Autrement dit, préalablement à la réception par le module d'entrée 45, des premier 75 et deuxième 80 réseaux de neurones, un apprentissage a déjà été effectué sur les premier 75 et deuxième 80 réseaux de neurones. Ainsi, les poids synaptiques réglables des réseaux de neurones 75, 80 ne sont pas tous égaux entre eux lors de leur réception par le module d'entrée 45.

Comme expliqué en référence à la figure 4, l'apprentissage du modèle d'apprentissage 100 comprenant deux fois le premier réseau de neurones 75_1, 75_2 permet de générer un modèle de classification 110 propre à discriminer les exemples adversaires et les OOD. Ainsi, le modèle de classification 110 est plus robuste tout en restant embarquable dans un système mobile.

## Revendications

1. Procédé (115) de classification d'une image à classer (12) parmi un ensemble de classes prédéfinies, à partir d'un modèle de classification (110), le procédé (115) étant mis en œuvre par un système électronique de classification (10),
le procédé (115) comprenant une phase d'apprentissage (120) comportant les étapes suivantes :
- formation (125) d'un modèle de d'apprentissage (100) à partir d'un premier réseau de neurones (75) et d'un deuxième réseau de neurones (80),
- obtention (130) d'un jeu de données d'apprentissage du modèle d'apprentissage (100),
- application (135) d'un algorithme d'apprentissage automatique au modèle d'apprentissage (100), à partir des données d'apprentissage, pour obtenir un premier réseau de neurones entraîné (75*) à partir du premier réseau de neurones (75), et un deuxième réseau de neurones entrainé (80*) à partir du deuxième réseau de neurones (80),
- génération (140) du modèle de classification (110) par connexion des réseaux de neurones entrainés (75*, 80*),
le procédé (115) comprenant en outre une phase d'exploitation (122) comportant les étapes suivantes :
- réception (150) de l'image à classer (12),
- détermination (155) de la classe associée à l'image à classer (12) par fourniture de l'image à classer (12) en entrée du modèle de classification (110),
dans lequel lors de l'étape de formation (125), le modèle d'apprentissage formé (100) comprend deux fois le même premier réseau de neurones (75_1, 75_2), une fonction de combinaison prédéfinie (105) connectée en sortie des premiers réseaux de neurones (75_1, 75_2), et le deuxième réseau de neurones (80) connecté en sortie de la fonction de combinaison prédéfinie (105), chaque donnée d'apprentissage comprenant un couple d'images distinctes (90) chacune pour un premier réseau de neurones (75_A, 75_2),
lors de l'étape d'application (135) de l'algorithme d'apprentissage automatique, les premiers réseaux de neurones (75_1, 75_2) du modèle d'apprentissage (100) étant identiques entre eux, et
lors de l'étape de génération (140), le modèle de classification (110) comprenant un unique premier réseau de neurones entrainé (75*),
dans lequel chaque donnée d'apprentissage comprend en outre un vecteur de classe associé au couple d'images (90), lors de l'étape d'application (140), l'algorithme d'apprentissage étant tel que, suite à son application, le modèle d'apprentissage (100) est propre à fournir un vecteur sensiblement identique au vecteur de classe lorsque le couple d'image (90) est fourni en entrée dudit modèle d'apprentissage (100),
dans lequel le vecteur de classe comprend une pluralité de composantes chacune associées à une classe telles que :
- si les deux images (90) appartiennent à une même classe, la composante associés à ladite classe a une première valeur prédéfinie préférentiellement égale à 1, et toutes les autres composantes ont une deuxième valeur prédéfinie préférentiellement égale à 0, et
- sinon, toutes les composantes sont identiques entre elles, préférentiellement égale au rapport entre 1 et le nombre de classes.

2. Procédé (115) selon la revendication précédente, dans lequel l'image à classer (12) représente un drone, un avion ou un hélicoptère,
l'ensemble de classes comprenant préférentiellement au moins une des classes suivantes :
- un drone,
- un avion, et
- un hélicoptère.

3. Procédé (115) selon la revendication précédente, dans lequel le premier réseau de neurones entrainé (75*) est un encodeur propre à convertir une image (90, 12) en un vecteur de sortie (82) représentatif du contenu de l'image (90, 12),
le deuxième réseau de neurones entraîné (80*) étant un classificateur propre à déterminer, à partir d'un vecteur de sortie (82) représentatif du contenu d'une image (90, 12), une classe à laquelle appartient le contenu de l'image (90, 12) parmi l'ensemble de classes prédéfinies.

4. Procédé (115) selon l'une quelconque des revendications précédentes, dans lequel chaque premier (75, 75_1, 75_2) et deuxième réseaux de neurones (80) comporte plusieurs couches de neurones et des poids synaptiques réglables connectant respectivement deux neurones de deux couches successives,
l'étape d'application (140) de l'algorithme d'apprentissage automatique comprenant le réglage des poids synaptiques réglables des premiers (75) et deuxième (80) réseaux de neurones tel que, pour chaque donnée d'apprentissage, la fourniture de chaque image (90) à un premier réseau de neurones (75_1, 75_2) respectif permet d'obtenir en sortie du modèle d'apprentissage (100), un vecteur sensiblement identique au vecteur de classe de la donnée d'apprentissage.

5. Procédé (115) selon l'une quelconque des revendications précédentes, dans lequel chaque premier réseau de neurones (75_1, 75_1) est propre à fournir, en sa sortie, un vecteur de sortie (82),
dans le modèle d'apprentissage (100), la fonction de combinaison (105) étant propre à calculer une moyenne des vecteurs de sortie (82) issus de chaque premier réseau de neurones (75_1, 75_2) et propre à fournir ladite moyenne en entrée du deuxième réseau de neurones (80).

6. Procédé (115) selon l'une quelconque des revendications précédentes, dans lequel, l'étape de détermination (155) de la classe associée à l'image comprend les sous-étapes suivantes :
- fourniture (156) de l'image à classer (12) en entrée du modèle de classification (110) pour calculer un vecteur (112) associé à l'image à classer (12), comportant une pluralité de composantes correspondant respectivement à une classe de l'ensemble de classes prédéfinies,
- pour chaque composante du vecteur calculé (112), comparaison (157) de ladite composante à un seuil prédéfini,
∘ si l'une des composantes est supérieure au seuil prédéfini, alors détermination (158) de la classe associée à l'image à classer (12) comme étant la classe correspondant à ladite composante, et
∘ si aucune des composantes n'est supérieure au seuil prédéfini, alors détermination (159) que l'image à classer (12) n'appartient à aucune classe de l'ensemble de classes prédéfinies.

7. Ensemble de produit(s) programme d'ordinateur comprenant des instructions logicielles qui, lorsqu'elles sont exécutées par un ou plusieurs ordinateurs, mettent en œuvre un procédé (115) de classification selon l'une quelconque des revendications précédentes.

8. Système (10) de classification d'une image à classer (12) parmi un ensemble de classes prédéfinies, à partir d'un modèle de classification (110), le système comprenant un dispositif électronique d'apprentissage (15) comportant :
- un module de formation (50) d'un modèle de d'apprentissage (100) à partir d'un premier réseau de neurones (75) et d'un deuxième réseau de neurones (80),
- un module d'entrée (45) d'un jeu de données d'apprentissage du modèle d'apprentissage (100),
- un module d'application (55) d'un algorithme d'apprentissage automatique au modèle d'apprentissage (100), à partir des données d'apprentissage, pour obtenir un premier réseau de neurones entrainé (75*) à partir du premier réseau de neurones (75), et un deuxième réseau de neurones entrainé (80*) à partir du deuxième réseau de neurones (80),
- un module de génération (60) du modèle de classification (110) par connexion des réseaux de neurones entrainé (75*, 80*),
le système de classification (10) comprenant en outre un dispositif électronique de d'exploitation (20) comportant :
- un module de réception (65) de l'image à classer (12),
- un module de détermination (70) de la classe associée à l'image à classer (12) par fourniture de l'image à classer (12) en entrée du modèle de classification (110),
dans lequel le module de formation (50) est propre à former le modèle d'apprentissage (100) en connectant une fonction de combinaison prédéfinie (105) connectée en sortie de chacun de deux fois le premier réseau de neurones (75_1, 75_2), et en connectant le deuxième réseau de neurones (80) en sortie de la fonction de combinaison prédéfinie (105), chaque donnée d'apprentissage comprenant un couple d'images distinctes (90) chacune pour un premier réseau de neurones (75_A, 75_2),
le module d'application (55) étant propre à ce que tout au long de l'application de l'algorithme d'apprentissage automatique, les premiers réseaux de neurones (75_1, 75_2) du modèle d'apprentissage (100) soient identiques entre eux, et
le module de génération (60) est propre à générer le module de classification (110),
dans lequel chaque donnée d'apprentissage comprend en outre un vecteur de classe associé au couple d'images (90),
l'algorithme d'apprentissage étant tel que, suite à son application par le module d'application (55), le modèle d'apprentissage (100) est propre à fournir un vecteur sensiblement identique au vecteur de classe lorsque le couple d'image (90) est fourni en entrée dudit modèle d'apprentissage (100),
dans lequel le vecteur de classe comprend une pluralité de composantes chacune associées à une classe telles que :
- si les deux images (90) appartiennent à une même classe, la composante associés à ladite classe a une première valeur prédéfinie préférentiellement égale à 1, et toutes les autres composantes ont une deuxième valeur prédéfinie préférentiellement égale à 0, et sinon, toutes les composantes sont identiques entre elles, préférentiellement égale au rapport entre 1 et le nombre de classes.

## Patentansprüche

1. Verfahren (115) zur Klassifizierung eines zu klassifizierenden Bildes (12) unter einer Menge von vordefinierten Klassen, ausgehend von einem Klassifizierungsmodell (110), wobei das Verfahren (115) durch ein elektronisches Klassifizierungssystem (10) implementiert wird,
wobei das Verfahren (115) eine Lernphase (120) umfasst, die die folgenden Schritte umfasst:
- Ausbildung (125) eines Modells des Lernens (100) ausgehend von einem ersten neuronalen Netz (75) und einem zweiten neuronalen Netz (80),
- Erhalten (130) eines Lerndatensatzes des Lernmodells (100),
- Anwendung (135) eines Algorithmus des maschinellen Lernens auf das Lernmodell (100), ausgehend von den Lerndaten, um ein erstes trainiertes neuronales Netz (75*) ausgehend von dem ersten neuronalen Netz (75), und ein zweites trainiertes neuronales Netz (80*) ausgehend von dem zweiten neuronalen Netz (80) zu erhalten,
- Erzeugung (140) des Klassifizierungsmodells (110) durch Verbindung der trainierten neuronalen Netze (75*, 80*),
wobei das Verfahren (115) außerdem eine Betriebsphase (122) umfasst, die die folgenden Schritte umfasst:
- Empfangen (150) des zu klassifizierenden Bildes (12),
- Bestimmung (155 ) der Klasse, die dem zu klassifizierenden Bild (12) zugeordnet ist, durch Bereitstellung des zu klassifizierenden Bildes (12) am Eingang des Klassifizierungsmodells (110),
wobei während des Schritts der Ausbildung (125) das ausgebildete Lernmodell (100) zweimal dasselbe erste neuronale Netz (75_1, 75_2), eine vordefinierte Kombinationsfunktion (105), die am Ausgang der ersten neuronalen Netze (75_1, 75_2) verbunden ist, und das zweite neuronale Netz (80), das am Ausgang der vordefinierten Kombinationsfunktion (105) verbunden ist, umfasst, wobei jedes Lerndatum ein Paar unterschiedlicher Bilder (90) umfasst, jedes für ein erstes neuronales Netz (75_A, 75_2),
während des Schritts der Anwendung (135) des Algorithmus des maschinellen Lernens, wobei die ersten neuronalen Netze (75_1, 75_2) des Lernmodells (100) untereinander identisch sind, und
während des Schritts der Erzeugung (140), wobei das Klassifizierungsmodell (110) ein einziges erstes trainiertes neuronales Netz (75*) umfasst,
wobei jedes Lerndatum außerdem einen Klassenvektor umfasst, der dem Paar von Bildern (90) zugeordnet ist,
während des Schritts der Anwendung (140), wobei der Lernalgorithmus derart ist, dass infolge seiner Anwendung das Lernmodell (100) dazu geeignet ist, einen Vektor bereitzustellen, der im Wesentlichen identisch mit dem Klassenvektor ist, wenn das Paar eines Bildes (90) am Eingang des besagten Lernmodells (100) bereitgestellt wird,
wobei der Klassenvektor eine Mehrzahl von Komponenten umfasst, die jeweils einer Klasse zugeordnet sind, derart dass:
- wenn die beiden Bilder (90) zu einer selben Klasse gehören, die der besagten Klasse zugeordnete Komponente einen ersten vordefinierten Wert hat, der vorzugsweise gleich 1 ist, und alle anderen Komponenten einen zweiten vordefinierten Wert haben, der vorzugsweise gleich 0 ist, und
- andernfalls alle Komponenten untereinander identisch sind, vorzugsweise gleich dem Verhältnis zwischen 1 und der Anzahl von Klassen.

2. Verfahren (115) nach dem vorhergehenden Anspruch, wobei das zu klassifizierende Bild (12) eine Drohne, ein Flugzeug oder einen Hubschrauber darstellt,
wobei die Menge von Klassen vorzugsweise mindestens eine der folgenden Klassen umfasst:
- eine Drohne,
- ein Flugzeug, und
- einen Hubschrauber.

3. Verfahren (115) nach dem vorhergehenden Anspruch, wobei das erste trainierte neuronale Netz (75*) ein Encoder ist, der dazu geeignet ist, ein Bild (90, 12) in einen Ausgangsvektor (82) umzuwandeln, der für den Inhalt des Bildes (90, 12) repräsentativ ist,
wobei das zweite trainierte neuronale Netz (80*) ein Klassifikator ist, der dazu geeignet ist, ausgehend von einem Ausgangsvektor (82), der für den Inhalt eines Bildes (90, 12) repräsentativ ist, eine Klasse zu bestimmen, zu welcher der Inhalt des Bildes (90, 12) unter der Menge von vordefinierten Klassen gehört.

4. Verfahren (115) nach einem beliebigen der vorhergehenden Ansprüche, wobei jedes erste (75, 75_1, 75_2) und zweite neuronale Netz (80) mehrere Schichten von Neuronen und einstellbare synaptische Gewichte umfasst, die jeweils zwei Neuronen zweier aufeinanderfolgender Schichten verbinden,
wobei der Schritt der Anwendung (140) des Algorithmus des maschinellen Lernens die Einstellung der einstellbaren synaptischen Gewichte der ersten (75) und zweiten (80) neuronalen Netze umfasst, derart, dass für jedes Lerndatum die Bereitstellung jedes Bildes (90) an einem jeweiligen ersten neuronalen Netz (75_1, 75_2) ermöglicht, am Ausgang des Lernmodells (100) einen Vektor zu erhalten, der im Wesentlichen identisch mit dem Klassenvektor des Lerndatums ist.

5. Verfahren (115) nach einem beliebigen der vorhergehenden Ansprüche, wobei jedes erste neuronale Netz (75_1, 75_1) dazu geeignet ist, an seinem Ausgang einen Ausgangsvektor (82) bereitzustellen,
wobei in dem Lernmodell (100) die Kombinationsfunktion (105) dazu geeignet ist, einen Mittelwert der Ausgangsvektoren (82) zu berechnen, die von jedem ersten neuronalen Netz (75_1, 75_2) stammen, und dazu geeignet ist, den besagten Mittelwert am Eingang des zweiten neuronalen Netzes (80) bereitzustellen.

6. Verfahren (115) nach einem beliebigen der vorhergehenden Ansprüche, wobei, der Schritt der Bestimmung (155) der Klasse, die dem Bild zugeordnet ist, die folgenden Unterschritte umfasst:
- Bereitstellung (156) des zu klassifizierenden Bildes (12) am Eingang des Klassifizierungsmodells (110), um einen Vektor (112) zu berechnen, der dem zu klassifizierenden Bild (12) zugeordnet ist, umfassend eine Mehrzahl von Komponenten, die jeweils einer Klasse der Menge von vordefinierten Klassen entsprechen,
- für jede Komponente des berechneten Vektors (112), Vergleichen (157) der genannten Komponente mit einem vordefinierten Schwellenwert,
∘ wenn eine der Komponenten größer als der vordefinierte Schwellenwert ist, dann Bestimmen (158) der dem zu klassifizierenden Bild (12) zugeordneten Klasse als die der genannten Komponente entsprechende Klasse, und
∘ wenn keine der Komponenten größer als der vordefinierte Schwellenwert ist, dann Bestimmen (159), dass das zu klassifizierende Bild (12) keiner Klasse der Menge von vordefinierten Klassen angehört.

7. Gesamtheit von Computerprogrammprodukt(en), umfassend Softwareanweisungen, die, wenn sie von einem oder mehreren Computern ausgeführt werden, ein Verfahren (115) der Klassifizierung nach einem beliebigen der vorhergehenden Ansprüche umsetzen.

8. System (10) zur Klassifizierung eines zu klassifizierenden Bildes (12) unter einer Menge von vordefinierten Klassen, ausgehend von einem Klassifizierungsmodell (110), wobei das System eine elektronische Lerneinrichtung (15) umfasst, aufweisend:
- ein Trainingsmodul (50) eines Modells des des Lernens (100) ausgehend von einem ersten neuronalen Netz (75) und einem zweiten neuronalen Netz (80),
- ein Eingabemodul (45) eines Lerndatensatzes des Lernmodells (100),
- ein Anwendungsmodul (55) eines Algorithmus des automatischen Lernens auf das Lernmodell (100), ausgehend von den Lerndaten, um ein erstes trainiertes neuronales Netz (75*) ausgehend von dem ersten neuronalen Netz (75), und ein zweites trainiertes neuronales Netz (80*) ausgehend von dem zweiten neuronalen Netz (80) zu erhalten,
- ein Erzeugungsmodul (60) des Klassifizierungsmodells (110) durch Verbindung der trainierten neuronalen Netze (75*, 80*),
wobei das Klassifizierungssystem (10) ferner eine elektronische Einrichtung des Betriebs (20) umfasst, aufweisend:
- ein Empfangsmodul (65) des zu klassifizierenden Bildes (12),
- ein Bestimmungsmodul (70) der dem zu klassifizierenden Bild (12) zugeordneten Klasse durch Bereitstellung des zu klassifizierenden Bildes (12) als Eingang des Klassifizierungsmodells (110),
in dem das Trainingsmodul (50) dazu geeignet ist, das Lernmodell (100) zu trainieren, indem eine vordefinierte Kombinationsfunktion (105), die am Ausgang jedes der zwei Vorkommen des ersten neuronalen Netzes (75_1, 75_2) verbunden ist, verbunden wird, und indem das zweite neuronale Netz (80) am Ausgang der vordefinierten Kombinationsfunktion (105) verbunden wird, wobei jedes Lerndatum ein Paar unterschiedlicher Bilder (90) umfasst, jeweils für ein erstes neuronales Netz (75_A, 75_2),
wobei das Anwendungsmodul (55) dazu geeignet ist, dass während der gesamten Anwendung des Algorithmus des automatischen Lernens die ersten neuronalen Netze (75_1, 75_2) des Lernmodells (100) untereinander identisch sind, und
wobei das Erzeugungsmodul (60) dazu geeignet ist, das Klassifizierungsmodul (110) zu erzeugen,
in dem jedes Lerndatum ferner einen dem Paar von Bildern (90) zugeordneten Klassenvektor umfasst,
wobei der Lernalgorithmus derart ist, dass infolge seiner Anwendung durch das Anwendungsmodul (55) das Lernmodell (100) dazu geeignet ist, einen Vektor bereitzustellen, der im Wesentlichen identisch mit dem Klassenvektor ist, wenn das Paar von Bildern (90) als Eingang des genannten Lernmodells (100) bereitgestellt wird,
in dem der Klassenvektor eine Vielzahl von Komponenten umfasst, die jeweils einer Klasse zugeordnet sind, derart dass:
- wenn die beiden Bilder (90) einer gleichen Klasse angehören, die der genannten Klasse zugeordnete Komponente einen ersten vordefinierten Wert hat, der vorzugsweise gleich 1 ist, und alle anderen Komponenten einen zweiten vordefinierten Wert haben, der vorzugsweise gleich 0 ist, und
wenn nicht, alle Komponenten untereinander identisch sind, vorzugsweise gleich dem Verhältnis zwischen 1 und der Anzahl von Klassen.

## Claims

1. Method (115) for classifying an image to be classified (12) among a set of predefined classes, from a classification model (110), the method (115) being implemented by an electronic classification system (10),
the method (115) comprising a learning phase (120) including the following steps:
- formation (125) of a learning model (100) from a first neural network (75) and a second neural network (80),
- obtaining (130) a learning dataset of the learning model (100),
- application (135) of a machine learning algorithm to the learning model (100), from the learning data, to obtain a first trained neural network (75*) from the first neural network (75), and a second trained neural network (80*) from the second neural network (80),
- generation (140) of the classification model (110) by connection of the trained neural networks (75*, 80*),
the method (115) further comprising an exploitation phase (122) including the following steps:
- receiving (150) the image to be classified (12),
- determination (155 ) of the class associated with the image to be classified (12) by provision of the image to be classified (12) as input of the classification model (110),
in which during the formation step (125), the formed learning model (100) comprises twice the same first neural network (75_1, 75_2), a predefined combination function (105) connected at the output of the first neural networks (75_1, 75_2), and the second neural network (80) connected at the output of the predefined combination function (105), each learning datum comprising a pair of distinct images (90) each for a first neural network (75_A, 75_2),
during the step of application (135) of the machine learning algorithm, the first neural networks (75_1, 75_2) of the learning model (100) being identical to one another, and
during the generation step (140), the classification model (110) comprising a single first trained neural network (75*),
in which each learning datum further comprises a class vector associated with the image pair (90),
during the application step (140), the learning algorithm being such that, following its application, the learning model (100) is specific to providing a vector substantially identical to the class vector when the image pair (90) is provided as input of said learning model (100),
in which the class vector comprises a plurality of components each associated with a class such that:
- if the two images (90) belong to a same class, the component associated with said class has a first predefined value preferably equal to 1, and all the other components have a second predefined value preferably equal to 0, and
- otherwise, all the components are identical to one another, preferably equal to the ratio between 1 and the number of classes.

2. Method (115) according to the preceding claim, in which the image to be classified (12) represents a drone, an airplane or a helicopter,
the set of classes preferably comprising at least one of the following classes:
- a drone,
- an airplane, and
- a helicopter.

3. Method (115) according to the preceding claim, in which the first trained neural network (75*) is an encoder specific to converting an image (90, 12) into an output vector (82) representative of the content of the image (90, 12),
the second trained neural network (80*) being a classifier specific to determining, from an output vector (82) representative of the content of an image (90, 12), a class to which the content of the image (90, 12) belongs among the set of predefined classes.

4. Method (115) according to any one of the preceding claims, in which each first (75, 75_1, 75_2) and second neural networks (80) comprises several layers of neurons and adjustable synaptic weights respectively connecting two neurons of two successive layers,
the step of application (140) of the machine learning algorithm comprising the adjustment of the adjustable synaptic weights of the first (75) and second (80) neural networks such that, for each learning datum, the provision of each image (90) to a respective first neural network (75_1, 75_2) makes it possible to obtain at the output of the learning model (100), a vector substantially identical to the class vector of the learning datum.

5. Method (115) according to any one of the preceding claims, in which each first neural network (75_1, 75_1) is specific to providing, at its output, an output vector (82),
in the learning model (100), the combination function (105) being specific to calculating an average of the output vectors (82) derived from each first neural network (75_1, 75_2) and specific to providing said average as input of the second neural network (80).

6. Method (115) according to any one of the preceding claims, in which, the step of determination (155) of the class associated with the image comprises the following sub-steps:
- provision (156) of the image to be classified (12) as input of the classification model (110) to calculate a vector (112) associated with the image to be classified (12), including a plurality of components corresponding respectively to a class of the set of predefined classes,
- for each component of the calculated vector (112), comparison (157) of said component with a predefined threshold,
∘ if one of the components is greater than the predefined threshold, then determination (158) of the class associated with the image to be classified (12) as being the class corresponding to said component, and
∘ if none of the components is greater than the predefined threshold, then determination (159) that the image to be classified (12) does not belong to any class of the set of predefined classes.

7. Set of computer program product(s) comprising software instructions which, when they are executed by one or more computers, implement a classification method (115) according to any one of the preceding claims.

8. System (10) for classification of an image to be classified (12) among a set of predefined classes, from a classification model (110), the system comprising an electronic learning device (15) comprising:
- a module for forming (50) a learning model (100) from a first neural network (75) and a second neural network (80),
- an input module (45) for a learning data set of the learning model (100),
- a module for applying (55) an automatic learning algorithm to the learning model (100), from the learning data, in order to obtain a first trained neural network (75*) from the first neural network (75), and a second trained neural network (80*) from the second neural network (80),
- a module for generating (60) the classification model (110) by connection of the trained neural networks (75*, 80*),
the classification system (10) further comprising an electronic operation device (20) comprising:
- a module for receiving (65) the image to be classified (12),
- a module for determining (70) the class associated with the image to be classified (12) by provision of the image to be classified (12) as input of the classification model (110),
in which the forming module (50) is specific to forming the learning model (100) by connecting a predefined combination function (105) connected at the output of each of two times the first neural network (75_1, 75_2), and by connecting the second neural network (80) at the output of the predefined combination function (105), each learning datum comprising a pair of distinct images (90) each for a first neural network (75_A, 75_2),
the application module (55) being specific to that throughout the application of the automatic learning algorithm, the first neural networks (75_1, 75_2) of the learning model (100) are identical to one another, and
the generation module (60) is specific to generating the classification module (110), in which each learning datum further comprises a class vector associated with the pair of images (90),
the learning algorithm being such that, following its application by the application module (55), the learning model (100) is specific to providing a vector substantially identical to the class vector when the pair of image (90) is provided as input of said learning model (100),
in which the class vector comprises a plurality of components each associated with a class such that:
- if the two images (90) belong to a same class, the component associated with said class has a first predefined value preferentially equal to 1, and all the other components have a second predefined value preferentially equal to 0, and
otherwise, all the components are identical to one another, preferentially equal to the ratio between 1 and the number of classes.
